# EUROPÄISCHE PATENTSCHRIFT

(11) **EP 3 371 020 B1**
(45) Veröffentlichungstag und Bekanntmachung des Hinweises auf die Patenterteilung: **06.01.2021**
(21) Anmeldenummer: 16788718.1
(22) Anmeldetag: 02.11.2016
(51) Int. Cl.: B60T 13/22, B60T 13/26, B60T 13/38, B60T 15/04, B60T 11/32

(54) **PNEUMATISCHE BREMSEINRICHTUNG**
PNEUMATIC BRAKING DEVICE
SYSTÈME DE FREINAGE PNEUMATIQUE

(30) Priorität: 06.11.2015 DE 102015119135
(43) Veröffentlichungstag der Anmeldung: 12.09.2018
(73) Patentinhaber: KNORR-BREMSE Systeme für Nutzfahrzeuge GmbH, 80809 München (DE)
(72) Erfinder: SCHNITTGER, Karsten, 80935 München (DE); KUHLEN, Christian, 85609 Aschheim (DE); GRIESSER, Fabian, 80803 München (DE)
(86) Internationale Anmeldenummer: PCT/EP2016/076409
(87) Internationale Veröffentlichungsnummer: WO 2017/076892

(56) Entgegenhaltungen:
- EP-A1- 1 504 975
- EP-A2- 0 976 636
- WO-A1-2007/065498
- WO-A2-2009/098003

## Beschreibung

Die vorliegende Erfindung betrifft eine pneumatische Bremseinrichtung für ein Nutzfahrzeug mit wenigstens einem pneumatisch ansteuerbaren Federspeicherbremszylinder und mit einer elektronischen Parkbremseinrichtung.

Pneumatische Bremseinrichtungen für Nutzfahrzeuge (z.B. Lastkraftwagen), die auch Anhänger ziehen können, sind bereits aus dem Stand der Technik bekannt. Derartige Systeme sind auch mit einer Parkbremsfunktion ausgestattet, die durch eine elektronische Parkbremseinrichtung bereitgestellt werden kann.

Beispielsweise wird in den Vereinigten Staaten von Amerika die Parkbremsfunktion durch Einlegen von Federspeicherbremszylindern sowohl im Nutzfahrzeug bzw. Zugfahrzeug als auch im Anhänger realisiert. Dazu werden die jeweiligen Federspeicher mit einem pneumatischen Parkventil angesteuert, welche die Federspeicher direkt, ohne Verwendung eines Relaisventils, befüllt oder entlüftet. Das Parkventil weist dabei einen ersten Ventilteil für den Lastkraftwagen und einen zweiten Ventilteil für den Anhänger auf. Diese können farblich unterschiedlich ausgestaltet sein, beispielsweise dass der erste Ventilteil für das Zugfahrzeug einen gelben Betätigungsknopf und der zweite Ventilteil für den Anhänger einen roten Betätigungsknopf aufweist. Aufgrund gesetzlicher Vorschriften kann es notwendig sein, dass die Bremseinrichtung ein Zugwagenschutzventil aufweist. Das Zugwagenschutzventil verhindert ein Abfallen des ausgesteuerten Luftdrucks für die Betriebsbremse des Zugfahrzeugs bei einem Druckabfall der Betriebsbremse des Anhängerfahrzeugs.

Hierbei wird davon ausgegangen, dass Druckluft ggf. sowohl aus der Druckluftleitung, welche dem Anhängerfahrzeug Druckluft für die Betriebsbremse bereitstellt, als auch aus der Druckluftleitung, welche dem Anhängerfahrzeug Druckluft für die Parkbremse bereitstellt, entweicht.

Dies ist beispielsweise dann der Fall, wenn sich das Anhängerfahrzeug vom Zugfahrzeug löst und dabei beide Druckluftleitungen, welche das Zugfahrzeug und das Anhängerfahrzeug verbinden, abreißen.

In anderen Ländern wird ein derartiges Zugwagenschutzventil nicht verwendet, stattdessen werden bistabile Ventileinheiten verwendet, wie dies beispielsweise aus der DE 10 2008 007 877 B3 bekannt ist.

Wie dies insbesondere aus der WO 2008/025398 A1 bekannt ist, werden Bistabil-Ventile im Zusammenhang mit der Verwendung von Zugwagen-Schutzventilen abgelehnt, und stattdessen anderweitig sichergestellt, dass auch im Falle eines Ausfalls der elektrischen Spannungsversorgung ein sicheres Abstellen des Fahrzeugs ermöglicht wird.

Weitere pneumatische Bremseinrichtungen für Nutzfahrzeuge mit einem Zugwagen-Schutzventil sind beispielsweise aus der DE 101 32 493 A1, der WO 00/78591 A1, der WO 2009/046779 A1 und der US 5,061,015 bekannt.

Dokument WO 2007/065498 A1 beschreibt eine pneumatische Bremseinrichtung gemäß dem Oberbegriff des Anspruchs 1.

Es ist die Aufgabe der vorliegenden Erfindung, eine pneumatische Bremseinrichtung für ein Nutzfahrzeug der eingangs genannten Art in vorteilhafter Weise weiterzubilden, insbesondere dahingehend, dass diese vergleichsweise einfach und sicher aufgebaut ist und im Vergleich zu den aus dem Stand der Technik bekannten Bremseinrichtungen zusätzliche Sicherheitsvorkehrungen aufweisen kann und betriebsstabil im Fahrzustand als auch im Bremszustand ist.

Diese Aufgabe wird erfindungsgemäß gelöst durch eine pneumatische Bremseinrichtung mit den Merkmalen des Anspruchs 1.

Danach ist vorgesehen, dass eine pneumatische Bremseinrichtung für ein Nutzfahrzeug mit wenigstens einem pneumatisch ansteuerbaren Federspeicher für eine Parkbremse des Nutzfahrzeugs und mit einer elektronischen Parkbremseinrichtung versehen ist, weiter mit wenigstens einer Steuerelektronik, wenigstens einer bistabilen Ventileinheit, wenigstens einer ersten Ventileinheit, mittels derer bei aktivierter Parkbremse des Nutzfahrzeugs eine Parkbremse eines Anhängers des Nutzfahrzeugs deaktiviert werden kann, wenigstens eine zweite Ventileinrichtung, die derart verschaltbar ist, dass bei einem Absinken des Systemdrucks zur Versorgung der Parkbremse des Anhängers die Parkbremse des Anhängers aktivierbar ist, und mit Zugfahrzeug-Schutzventil. Die Erfindung basiert auf dem Grundgedanken, durch die Verwendung von bistabilen Ventileinheiten eine Funktionalität in einer pneumatischen Bremseinrichtung für ein Nutzfahrzeug bereitzustellen, so dass auch ohne Elektrizität die aktuelle Stellung der Bremseinrichtung, also Fahren oder Parken beibehalten wird. Mittels dieser bistabilen Ventileinheit sollen dann die Federspeicher des Nutzfahrzeugs (Zugfahrzeugs) und auch des Anhängers belüftet oder entlüftet werden können. Unter dem Begriff bistabile Ventileinheit im Sinne der Erfindung ist insbesondere eine pneumatisch und/oder elektrisch/elektronisch ansteuerbare Ventileinheit zu verstehen, nicht aber ein Steuerschalter, der pneumatisch oder elektrisch eine Bremseinrichtung bzw. eine Parkbremseinrichtung ansteuert. Zusätzlich ist eine erste Ventileinrichtung vorgesehen, die bei entlüfteten Federspeichern des Zugfahrzeugs die Federspeicher des Anhängers belüften kann. Die zweite Ventileinrichtung kann bei belüfteten Federspeichern des Lastkraftwagens die Federspeicher des Anhängers entlüften. Dies beinhaltet insbesondere auch eine Notbremse-Funktionalität, die beim Absinken des Systemdrucks für den Anhänger unter einen bestimmten Schwellenwert die Parkbremse des Anhängers aktiviert (Emergency Braking). Des Weiteren ist ein Zugwagen-Schutzventil vorgesehen, mittels dessen ein Abfallen des ausgesteuerten Luftdrucks für die Betriebsbremse des Zugfahrzeugs beim Druckabfall des ausgesteuerten Luftdrucks für die Betriebsbremse des Anhängers verhindert wird. Mit anderen Worten ist das Zugwagen-Schutzventil derart angeordnet, dass die Druckluftverbindung zwischen Zugfahrzeug und Anhängerfahrzeug notfalls unterbrochen werden kann.

Des Weiteren ist vorgesehen dass mittels der bistabilen Ventileinheit sowohl die Parkbremse des Zugfahrzeugs als auch die Parkbremse des Anhängers ansteuerbar ist. Hierdurch wird ein einfacher Aufbau der Parkbremseinrichtung möglich. Durch den Umstand, dass mittels der bistabilen Ventileinheit sowohl die Bremseinrichtung des Zugfahrzeugs als auch die Bremseinrichtung des Anhängers ansteuerbar ist, wird eine Funktionsintegration in der bistabilen Ventileinheit erreicht.

Insbesondere ist vorgesehen, dass die bistabile Ventileinheit über eine erste Leitung mit dem Federspeicher des Nutzfahrzeugs in Verbindung steht und über eine zweite davon separate Leitung mit der Parkbremse des Anhängers in Verbindung steht.

Das Zugfahrzeug-Schutzventil kann Bestandteil der elektronischen Parkbremseinrichtung sein.

Alternativ kann vorgesehen sein, dass das Zugfahrzeug-Schutzventil Bestandteil einer Luftaufbereitungsanlage der pneumatischen Bremseinrichtung ist.

Die zweite Ventileinrichtung kann wenigstens einen Drucksensor aufweisen, mittels dessen ein Druckabfall des Systemdrucks für die Parkbremse des Anhängers unter einen vorgegebenen Schwellenwert ermittelbar und ein Signal generierbar ist, anhand dessen mittels der Steuerelektronik die Parkbremse des Anhängers aktivierbar ist. Hierdurch kann einfach und zuverlässig festgestellt werden, ob es zu einem Absinken des Systemdrucks im Anhänger gekommen ist und dort der Druck unter einen bestimmten Schwellenwert gefallen ist. Sodann kann die Parkbremse des Anhängers aktiviert werden. Diese Funktion wird auch Emergency Braking genannt.

Des Weiteren kann vorgesehen sein, dass die zweite Ventileinrichtung wenigstens ein pneumatisches Ventil aufweist, mittels dessen die Parkbremse des Anhängers aktivierbar ist. Dadurch wird es möglich, unabhängig von der Bremseinrichtung des Zugfahrzeugs die Parkbremse des Anhängers gesondert zu aktivieren.

Die bistabile Ventileinheit kann ein bistabiles Ventil mit Rückkopplung umfassen. Durch die Rückkopplung lässt sich beispielsweise erreichen, dass eine Notbremsfunktion für den Anhänger integriert werden kann.

In diesem Zusammenhang kann vorgesehen sein, dass das bistabile Ventil mit Rückkopplung ein Relaisventil ist. Insbesondere kann hier vorgesehen sein, dass eine bistabile Ventilfunktion durch die Nutzung eines Relaisventils als bistabiles Ventil erreicht wird.

Des Weiteren kann vorgesehen sein, dass die bistabile Ventileinheit weiter eine Drossel aufweist.

Mittels der Drossel kann der Volumenstrom der Rückkopplung vom Ausgang des Relaisventils zu dessen Steuerseite begrenzt werden. Hierdurch wird es möglich, die Schaltpunkte des Relaisventils besser einstellen zu können.

Die erste Ventileinheit kann das Relaisventil des Anhängers und wenigstens zwei weitere Magnetventile aufweisen. Denkbar ist in diesem Zusammenhang auch, dass die erste Ventileinheit durch das Relaisventil des Anhängers und drei Magnetventile ausgebildet wird. Der Begriff Ventileinheit ist hier insbesondere dahingehend zu verstehen, dass mehrere Komponenten einer pneumatischen Bremseinrichtung funktional miteinander zusammenwirken. Durch das Zusammenwirken des Relaisventils des Anhängers sowie der Magnetventile wird es möglich, die Bremseinrichtung des Anhängers, d.h. die Federspeicher des Anhängers anzusteuern und dies gesondert von der Bremseinrichtung des Zugfahrzeugs. Dies bedeutet, dass es auch bei entlüfteten Federspeichern des Zugfahrzeugs möglich ist, die Federspeicher des Anhängers belüften zu können.

Des Weiteren kann vorgesehen sein, dass die zweite Ventileinheit des Relaisventils des Anhängers, wenigstens zwei weitere Magnetventile sowie wenigstens einen Drucksensor aufweist. Auch hier ist der Begriff zweite Ventileinheit dahingehend zu verstehen, dass für eine bestimmte Funktionalität mehrere Komponenten miteinander zusammenwirken. Durch das Zusammenwirken des Relaisventils des Anhängers, wenigstens weiterer zweier Magnetventile sowie eines Drucksensors wird es möglich, zum einen ein Absinken des Systemdrucks für den Anhänger und einen bestimmten Schwellenwert zu detektieren und in Abhängigkeit hiervon, insbesondere im Zusammenwirken mit der Steuerelektronik der pneumatischen Bremseinrichtung das Relaisventil und die weiteren zwei Magnetventile derart zu schalten, dass die Parkbremse des Anhängers aktiviert werden kann, was einer Notbremse gleich kommt. Mittels des Drucksensors kann insbesondere die Zuleitung stromabwärts des Relaisventils des Anhängers zu den Federspeichern des Anhängers überwacht werden.

Die zweite Ventileinheit kann ferner das Relaisventil des Anhängers und wenigstens ein Entlüftungsventil aufweisen. Über die Entlüftung wird es möglich, die Federspeicher des Anhängers mittels des Entlüftungsventils entlüften zu können.

Alternativ ist auch denkbar, dass die bistabile Ventileinheit ein bistabiles Ventil ohne Rückkopplung umfasst.

Insbesondere ist in diesem Zusammenhang denkbar, dass das bistabile Ventil der bistabilen Ventileinheit ohne Rückkopplung ein bistabiles 3/2-Wegeventil ist, das ein Relaisventil ansteuert.

Insbesondere kann vorgesehen sein, dass die bistabile Ventileinheit weiter das Ventil des Nutzfahrzeugs umfasst. Denkbar ist in diesem Zusammenhang auch, dass das Relaisventil des Nutzfahrzeugs sowie ein weiteres Steuerventil gemeinsam in funktionaler Hinsicht die bistabile Ventileinheit ausbilden.

Des Weiteren kann vorgesehen sein, dass die erste Ventileinheit das Relaisventil des Anhängers und wenigstens ein Magnetventil aufweist. Denkbar ist aber auch, dass beispielsweise auch mehr als ein Magnetventil vorgesehen sein kann.

Außerdem ist denkbar, dass die zweite Ventileinheit das Relaisventil des Anhängers, wenigstens ein Magnetventil sowie wenigstens einen Drucksensor aufweist.

Mittels des Drucksensors kann ein Druckabfall im Anhänger detektiert werden und mittels der Magnetventile sowie des Relaisventils kann sodann eine Schaltung herbeigeführt werden, mittels derer die Federspeicher des Anhängers entlüftet werden können.

Grundsätzlich ist denkbar, dass mittels eines Drucksensors ein Druckabfall registriert wird, worauf die Federspeicher des Anhängers mittels eines elektrischen Signals und mittels wenigstens eines Magnetventils entlüftet werden.

Alternativ und/oder zusätzlich kann auch eine Lösung vorgesehen sein, bei der mittels eines pneumatischen Ventils die Federspeicher des Anhängers entlüftet werden, wenn mittels der zweiten Ventileinrichtung ein Absinken des Systemdrucks für den Anhänger unter einen bestimmten Schwellenwert detektiert wird, so dass die Parkbremse des Anhängers aktiviert wird (Notbremsung).

Weitere Einzelheiten und Vorteile der Erfindung sollen nun anhand eines in den Zeichnungen dargestellten Ausführungsbeispiels näher erläutert werden.

Es zeigen:
- Fig. 1: eine schematische Zeichnung eines erfindungsgemäßen Ausführungsbeispiels einer pneumatischen Bremseinrichtung für ein Nutzfahrzeug;
- Fig. 2: eine schematische Darstellung einer ersten Ausführungsform einer elektronischen Parkbremseinrichtung;
- Fig. 3: eine schematische Darstellung einer zweiten Ausführungsform einer elektronischen Parkbremseinrichtung;
- Fig. 4: eine schematische Darstellung einer dritten Ausführungsform einer elektronischen Parkbremseinrichtung;
- Fig. 5: eine schematische Darstellung einer vierten Ausführungsform einer elektronischen Parkbremseinrichtung;
- Fig. 6: eine schematische Darstellung einer fünften Ausführungsform einer elektronischen Parkbremseinrichtung; und
- Fig. 7: eine schematische Darstellung einer sechsten Ausführungsform einer elektronischen Parkbremseinrichtung.

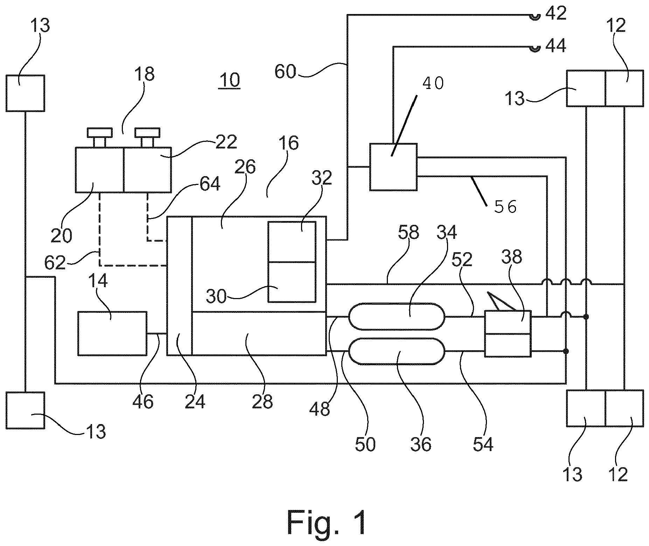

**Fig. 1** zeigt eine pneumatische Bremseinrichtung 10 für ein Nutzfahrzeug, beispielsweise einen Lastkraftwagen (nicht näher dargestellt).

Die pneumatische Bremseinrichtung 10 weist mehrere pneumatisch ansteuerbare Federspeicher 12 für die Parkbremse des Nutzfahrzeugs, auch Zugfahrzeug genannt, sowie pneumatisch ansteuerbare Bremszylinder 13 der Betriebsbremse für die Vorderachse als auch für die Hinterachse bzw. die Hinterachsen auf. Im gezeigten Ausführungsbeispiel sind an der Hinterachse der Federspeicher 12 und der Bremszylinder 13 als Federspeicherbremszylinder ausgeführt, mit dem Federspeicher 12 für die Parkbremsfunktion und mit dem Bremszylinder 13 für die Betriebsbremse.

Weiter ist ein Kompressor 14 vorgesehen, der mit einer elektronischen Parkbremseinrichtung 16 in Verbindung steht.

Weiter ist ein Parkventilschaltelement 18 vorgesehen, das einen ersten Schalter 20 und einen zweiten Schalter 22 aufweisen kann.

Die elektronische Parkbremseinrichtung 16 weist eine Steuerelektronik 24, eine bistabile Ventileinheit 26, eine Luftaufbereitung 28 sowie eine erste Ventileinrichtung 30 und eine zweite Ventileinrichtung 32 auf. Stromabwärts der elektronischen Parkbremseinrichtung 16 sind ein erster Druckluftbehälter 34 und ein zweiter Druckluftbehälter 36 vorgesehen.

Ferner ist das Fußbremsventil 38 der Bremseinrichtung 10 gezeigt. Darüber hinaus ist ein Zugfahrzeug-Schutzventil 40 vorgesehen.

Die pneumatische Bremseinrichtung 10 weist weiter einen Anschluss 42 zum Federspeicher eines Anhängers sowie einen weiteren gesonderten Anschluss 44 zur Betriebsbremse des Anhängers auf.

Der Kompressor 14 ist über eine Leitung 46 mit der Parkbremseinrichtung 16 verbunden. Stromabwärts der Parkbremseinrichtung 16 schließen sich an die Luftaufbereitung 28 Leitungen 48 und 50 an, die zum Behälter 34 bzw. Behälter 36 führen.

Das Fußbremsventil 38 wird über die Leitung 52 mit dem ersten Behälter 34 verbunden und über die Leitung 54 mit dem zweiten Behälter 36. Stromabwärts des Fußbremsventils 38 schließen die Versorgungsleitungen und Leitungszweige zu den Bremszylindern 13 bzw. Federspeichern 12 an. Das Zugfahrzeug-Schutzventil 40 ist ebenfalls an diese Leitung angeschlossen, wobei die Druckluft, die von diesem Leitungszweig zum Zugfahrzeug-Schutzventil 40 strömt und sodann weiter zu dem Anschluss 44 für die Betriebsbremse des Anhängers bzw. zum Anschluss 42 für den Federspeicher des Anhängers strömt, zunächst durch das Zugfahrzeug-Schutzventil 40 hindurch geleitet werden muss. Das Fußbremsventil 38 ist über eine Leitung 56 mit dem Zugfahrzeug-Schutzventil 40 verbunden.

Die bistabile Ventileinheit 26 steht über die Leitung 58 mit den Federspeichern 12 des Zugfahrzeugs in Verbindung und über die Leitung 60 mit der Parkbremse des Anhängers.

Die erste Ventileinheit 30 ist über eine Leitung 60 mit der Parkbremse des Anhängers verbunden.

Die zweite Ventileinheit 32 ist über eine Leitung 60 mit dem Anschluss 42 für die Federspeicher des Anhängers verbunden.

Die Steuerelektronik 24 ist mit dem Parkventilschaltelement 18 verbunden, wobei eine erste Signalleitung 62 vom ersten Schalter mit der Steuerelektronik 24 verbunden ist und eine zweite Leitung 64 mit der Elektronik 24 verbunden ist, die eine Verbindung mit dem zweiten Schalter des Parkventilschaltelements 18 herstellt.

Die pneumatische Bremseinrichtung 10 weist somit mehrere pneumatisch ansteuerbare Federspeicher 12 für die Parkbremse des Nutzfahrzeugs auf sowie eine elektronische Parkbremseinrichtung 16 auf, die selbst wiederum eine Steuerelektronik 24 aufweist.

Darüber hinaus ist Bestandteil der elektronischen Parkbremseinrichtung 16 eine bistabile Ventileinheit 26, sowie eine erste Ventileinheit 30, mittels derer die Federspeicher der Parkbremse des Anhängers des Zugfahrzeugs belüftbar sind sowie eine zweite Ventileinrichtung 32, die derart verschaltbar ist, dass bei einem Absinken des Systemdrucks für den Anhänger des Zugfahrzeugs die Bremseinrichtung des Anhängers aktivierbar ist.

Mittels der bistabilen Ventileinheit 26 ist sowohl die Parkbremse des Zugfahrzeugs mit als auch die Parkbremse des Anhängers ansteuerbar..

Dabei kann die bistabile Ventileinheit 26 neben dem bistabilen Ventil auch weitere Ventile umfassen, die nicht bistabil ausgeführt sind. Das kann z.B. ein Relaisventil für die Parkbremse des Anhängers sein.

Das Zugfahrzeug-Schutzventil 40 ist hier Bestandteil in der Bremseinrichtung, kann jedoch alternativ auch als Bestandteil der elektronischen Parkbremseinrichtung 16 ausgeführt sein oder als Bestandteil der Luftaufbereitungsanlage 28 der pneumatischen Bremseinrichtung 10.

Die Funktion der pneumatischen Bremseinrichtung 10 ist hier wie folgt:
Die elektronische Parkbremseinrichtung 16 umfasst eine Steuerelektronik 24 und verarbeitet die Steuersignale, die vom elektronischen Parkventil 18 übermittelt werden.

Darüber hinauf findet ein Informationsaustausch mit der Steuerelektronik 24 des Lastkraftwagens statt (nicht im Detail gezeigt).

Das bistabile Ventil 26 behält auch ohne Elektrizität seine aktuelle Stellung bei. Dieses Ventil kann direkt oder über ein oder mehrere Relaisventile gemeinsam die Parkbremse des Zugfahrzeugs und die Parkbremse des Anhängers (über die Leitung 58 und die Leitung 60 und den Anschluss 42) belüften oder entlüften.

Die erste Ventileinrichtung 30 kann beim entlüfteten Federspeicher des Lastkraftwagens die Federspeicher des Anhängers belüften. Dies ist beispielsweise für die Trailertest-Funktion notwendig.

Die zweite Ventileinrichtung 32 kann bei belüfteten Federspeichern des Lastkraftwagens die Federspeicher des Anhängers entlüften, und zwar über die Leitung 60 und den Anschluss 42. Dies beinhaltet insbesondere eine Notbremse-Funktionalität, die beim Absinken des Systemdrucks für den Anhänger unter einen bestimmten Schwellenwert die Parkbremse des Anhängers aktiviert (sog. Emergency Braking Funktion).

Die Ansteuerung der Bremseinrichtung 10 über das elektronische Parkventil 18 mit den Schaltern 20 und 22 kann für die folgenden Betriebszustände wie folgt erfolgen:
Im Fahrzustand sind beispielsweise der Schalter 20 zur Betätigung der Parkbremseinrichtung des Zugfahrzeugs und der Schalter 22 zur Betätigung der Parkbremseinrichtung des Anhängers gedrückt (alternativ auch andere Betätigungsstellungen denkbar).

Dadurch wird die bistabile Ventileinheit 26 durchgeschaltet während die erste Ventileinheit 30 und die zweite Ventileinheit 32 nicht durchgeschaltet sind.

Dadurch sind sowohl die Federspeicher 12 für die Parkbremse des Zugfahrzeugs als auch die Federspeicher für die Parkbremse des Anhängers freigegeben.

Im Parkzustand sind die beiden Schalter 20 und 22 gezogen, so dass die bistabile Ventileinheit 26, die erste Ventileinheit 30 und die zweite Ventileinheit 32 nicht durchgeschaltet sind.

Somit sind die Federspeicher 12 für die Parkbremse des Zugfahrzeugs derart geschaltet, dass die Parkbremse des Zugfahrzeugs aktiviert sind. Dies gilt auch für die Federspeicher für die Parkbremse des Anhängers, die ebenfalls derart geschaltet sind, dass die Parkbremse des Anhängers aktiviert sind.

Für die Befüllung des Anhängers kann ein Betriebszustand genutzt werden, bei dem die Parkbremse des Zugfahrzeugs aktiviert ist, die des Anhängers aber nicht. Das kann auch genutzt werden, um den sogenannten Trailer-Test durchzuführen. Es ist der Schalter 20 gezogen und der Schalter 22 eingedrückt (aktiviert). Dadurch ist die bistabile Ventileinheit 26 nicht durchgeschaltet, aber die erste Ventileinheit 30. Die zweite Ventileinheit 32 ist ebenfalls nicht durchgeschaltet.

Dies hat zur Folge, dass die Federspeicher 12 für die Parkbremse des Zugfahrzeugs derart geschaltet sind, dass das Zugfahrzeug gebremst ist und die Federspeicher für die Parkbremse des Anhängers derart geschaltet sind, dass diese freigegeben sind.

Bei dem Betriebszustand Anhänger Parken (Bremsung nur über Anhänger), ist der Schalter 20 gedrückt und der Schalter 22 gezogen.

Folglich ist die bistabile Ventileinheit 26 aktiviert, die erste Ventileinheit 30 nicht aktiviert und die zweite Ventileinheit 32 aktiviert.

Dies hat zur Folge, dass die Federspeicher 12 für die Parkbremse des Zugfahrzeugs derart geschaltet sind, dass das Zugfahrzeug ungebremst ist und die Federspeicher für die Parkbremse des Anhängers aktiviert sind, so dass der Anhänger gebremst wird.

Bei dem Betriebszustand Notbremsung, der automatisch aktiviert wird, nämlich dann, wenn ein Absinken des Systemdrucks für die Parkbremse des Anhängers detektiert wird, befindet sich üblicherweise das Fahrgespann, bestehend aus Zugfahrzeug und Anhänger, im Fahrzustand, d.h. der Schalter 20 und der Schalter 22 sind beide gedrückt. Abweichend zum vorbeschriebenen Fahrzustand, bei dem die bistabile Ventileinheit 26 durchgeschaltet und die erste und die zweite Ventileinheit 30, 32 an sich nicht aktiviert sind, wird nun die zweite Ventileinheit 32 derart geschaltet, und zwar automatisch, dass diese ebenfalls durchschaltet.

Dadurch wird erreicht, dass die Federspeicher 12 für die Parkbremse des Zugfahrzeugs weiterhin derart geschaltet sind, dass das Zugfahrzeug ungebremst ist, jedoch die Federspeicher für die Parkbremse des Anhängers derart geschaltet werden, dass sie vom ungebremsten Zustand in den gebremsten Zustand geschaltet werden.

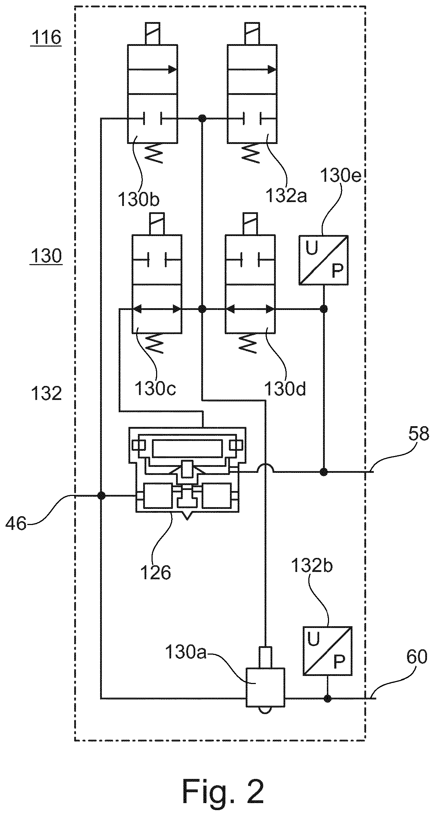

Die **Figuren 2 bis 5** betreffen mögliche Ausführungsformen der elektronischen Parkbremseinrichtung mit Rückkopplung, wie sie bei dem in Fig. 1 gezeigten Ausführungsbeispiel einer pneumatischen Bremseinrichtung 10 eingesetzt werden können.

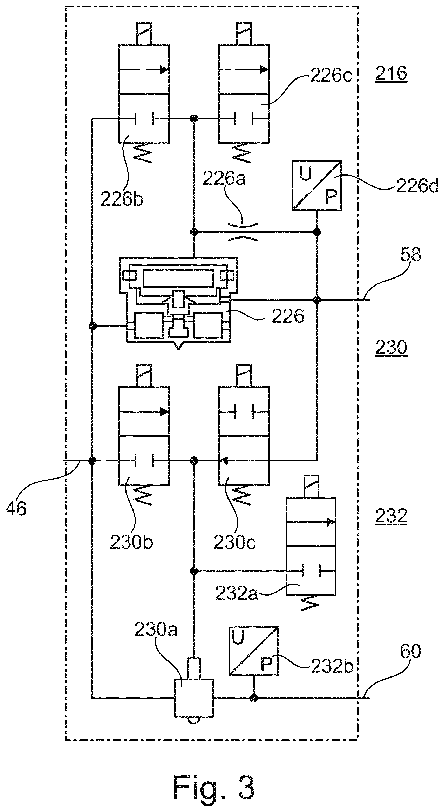

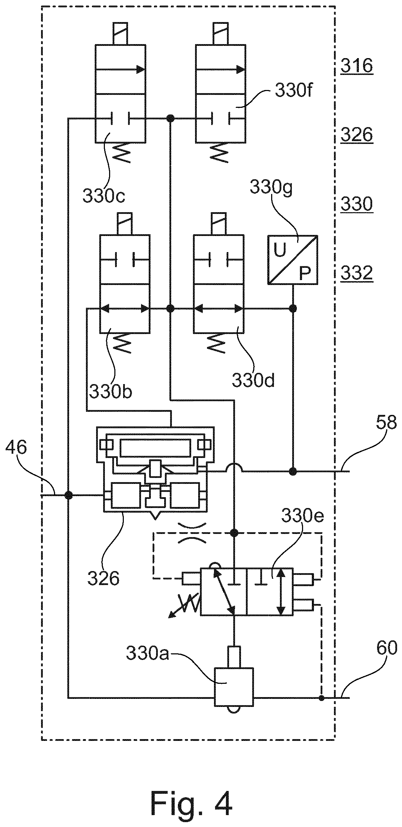

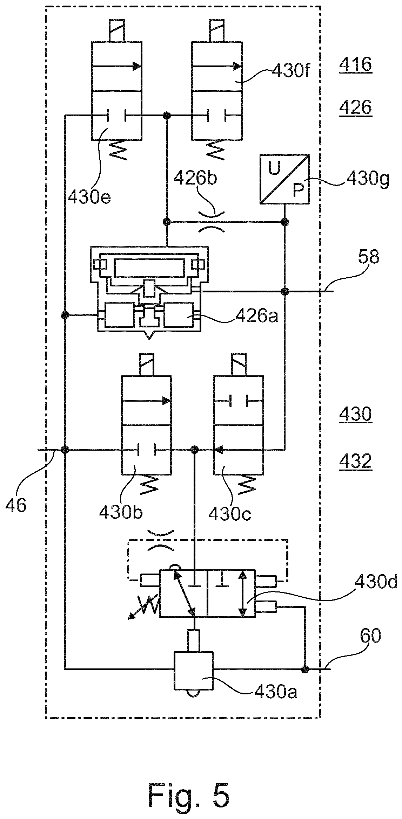

Jede der gezeigten Ausführungsformen der elektronischen Parkbremseinrichtungen 116 (Fig. 2), 216 (Fig. 3), 316 (Fig. 4) und 416 (Fig. 5) ist als mögliche Ausführungsform der elektronischen Parkbremseinrichtung 16, wie grob schematisch in Fig. 1 gezeigt, zu verstehen.

Fig. 2 zeigt eine erste mögliche Ausführungsform einer elektronischen Parkbremseinrichtung 116 mit einem bistabilen Ventil 126 mit Rückkopplung.

Das bistabile Ventil 126 ist hier ein Relaisventil 126 des Zugfahrzeugs. Da dieses bistabile Ventil im Fahren und Parken auch das Relaisventil des Anhängers ansteuert, ist dieses Ventil im funktionalen Zusammenhang mit der bistabilen Ventileinheit zu sehen.

Die erste Ventileinheit 130 weist in funktionalem Zusammenhang das Relaisventil des Anhängers 130a, ein erstes Magnetventil 130b, ein zweites Magnetventil 130c sowie ein drittes Magnetventil 130d auf. Benachbart zu Ventil 130d ist ein Drucksensor 130e vorgesehen.

Die zweite Ventileinheit 132 wird funktional ausgebildet ebenfalls durch das Relaisventil des Anhägers 130a, ein weiteres Magnetventil 132a sowie einen Drucksensor 132b.

Fig. 3 zeigt in schematischer Ansicht ein weiteres Ausführungsbeispiel einer elektronischen Parkbremseinrichtung 216, die eine mögliche Ausführungsform der in Fig. 1 gezeigten Parkbremseinrichtung 16 darstellt.

Die elektronische Parkbremseinrichtung 216 gemäß Fig. 3 ist eine Ausführungsform mit Drucksensor und Rückkopplung mit Drossel.

Die bistabile Ventileinheit 226 wird durch das Relaisventil des Zugfahrzeugs 226 sowie durch eine Drossel 226a ausgebildet. Auch hier ist das Relaisventil des Anhängers noch funktional dieser Ventileinheit zuzuordnen.

Die erste Ventileinheit 230 wird durch das Relaisventil des Anhängers 230a, ein erstes Magnetventil 230b und ein zweites Magnetventil 230c ausgebildet.

Die zweite Ventileinheit 232 wird ebenfalls durch das Relaisventil des Anhängers 230a, das Magnetventil 230c, aber auch durch das Magnetventil 232a und den Drucksensor 232b ausgebildet.

Zur Ansteuerung der bistabilen Ventileinheit 226, gebildet durch das Relaisventil 226 des Zugfahrzeugs sowie die Drossel 226a, sind weitere Magnetventile 226b und 226c vorgesehen. Des Weiteren ist, benachbart zur Drossel 226a, auch ein weiterer Drucksensor 226d vorgesehen.

Fig. 4 zeigt in schematischer Darstellung ein weiteres Ausführungsbeispiel einer elektronischen Parkbremseinrichtung 316, die in dem Ausführungsbeispiel gemäß Fig. 1 eine mögliche Ausführungsform für die dort gezeigte elektronische Parkbremseinrichung 16 darstellt.

Die bistabile Ventileinheit 326 ist hier durch das Relaisventil 326a des Zugfahrzeugs ausgebildet. Funktional ist auch das von diesem Ventil angesteuerte Relaisventil des Anhängers dieser Funktionseinheit zuzuordnen.

Die erste Ventileinheit 330 wird ausgebildet durch das Relaisventil des Anhängers 330a, ein Magnetventil 330b und Magnetventile 330c und 330d.

Ferner wird die erste Ventileinheit 330 durch ein pneumatisches Ventil 330e mit ausgebildet.

Die in Fig. 4 gezeigte Ausführungsform stellt eine mögliche Parkbremseinrichtung ohne Drossel aber mit Rückkopplungsfunktion dar.

Die zweite Ventileinheit 332 wird ausgebildet durch das Relaisventil des Anhängers 330a sowie das pneumatische Ventil 330e.

Des Weiteren weist die elektronische Parkbremseinrichtung 316 noch ein weiteres Magnetventil 330f sowie ein Drucksensor 330g auf.

Fig. 5 zeigt eine weitere Ausführungsform einer elektronischen Parkbremseinrichtung 416, die eine mögliche Ausführungsform der in Fig. 1 gezeigten elektronischen Parkbremseinrichtung 16 darstellt.

Die bistabile Ventileinheit 426 wird hier durch das Relaisventil des Zugfahrzeugs 426a sowie durch die Drossel 426b ausgebildet. Funktional ist auch das von diesem Ventil angesteuerte Relaisventil des Anhängers dieser Funktionseinheit zuzuordnen.

Die erste Ventileinheit 430 wird ausgebildet durch das Relaisventil des Anhängers 430a, ein erstes Magnetventil 430b, ein zweites Magnetventil 430c sowie ein pneumatisches Ventil 430d.

Die zweite Ventileinheit 432 wird ausgebildet durch das Relaisventil des Anhängers 430a sowie durch das pneumatische Ventil 430d.

Die elektronische Parkbremseinrichtung 416 gemäß Fig. 5 weist weiter noch weitere Magnetventil 430e und 430f sowie einen Drucksensor 430g auf.

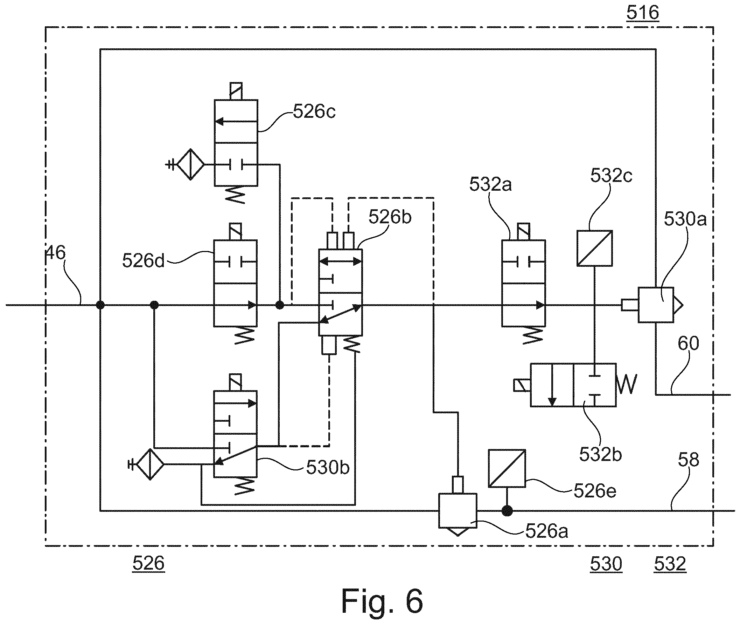

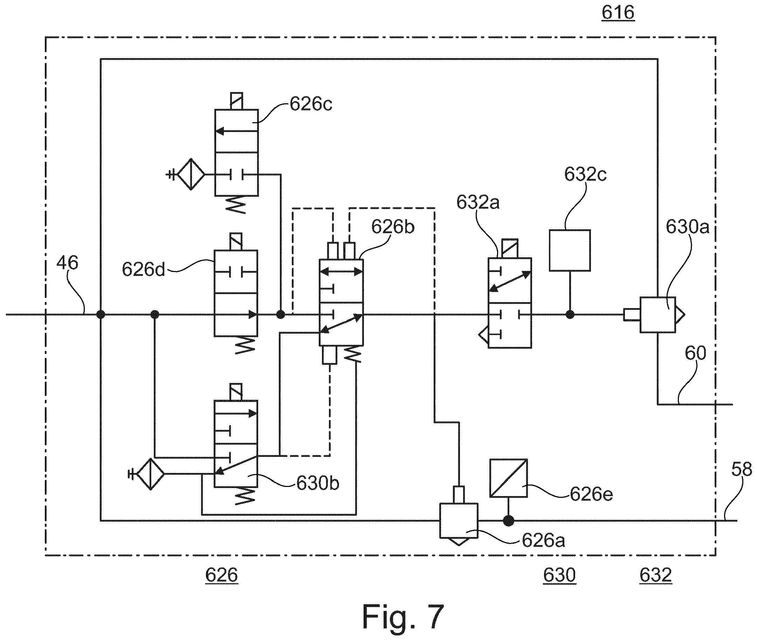

In den **Figuren 6** **und** **7** sind Ausführungsformen einer elektronischen Parkbremseinrichtung 516 (Fig. 6) sowie einer elektronischen Parkbremseinrichtung 616 (Fig. 7) gezeigt.

In beiden Fällen können diese Ausführungsformen eine mögliche Ausgestaltung der in Fig. 1 gezeigten elekronischen Parkbremseinrichtung 16 sein.

Beide Ausführungen einer elektronischen Parkbremseinrichtung 516, 616 sind Ausführungsformen mit einer bistabilen Ventileinheit ohne Rückkopplung.

Die bistabile Ventileinheit in 526 in Fig. 6 der elektronischen Parkbremseinrichtung 516 wird ausgebildet durch das Relaisventil des Zugfahrzeugs 526a und eine

Steuerventileinrichtung 526b, die pneumatisch/elektrisch ansteuerbar ist. Da die Steuerventileinrichtung 526b im Parken und Fahren auch das Relaisventil des Anhängers ansteuert, ist dieses auch dieser Funktionseinheit zuzuordnen.

Der Aufbau und die Funktionalität einer derartigen elektronischen Parkbremseinrichtung 516 ist vergleichbar wie der bereits aus dem Stand der Technik bekannten Parkbremseinrichtung mit einem bistabilen Steuerventil, das ein Relaisventil ansteuert, vgl. z.B. DE 10 2008 007 877 B3.

Die erste Ventileinheit 530 wird durch das Relaisventil des Anhängers 530a sowie durch ein Magnetventil 530b ausgebildet.

Die zweite Ventileinheit 532 wird ausgebildet durch das Relaisventil des Anhängers 530a, ein erstes Magnetventil 532a sowie ein zweites Magnetventil 532b sowie einen Drucksensor 532c.

Eingangsseitig vor dem Steuerventil 526b sind weitere Magnetventile 526c und 526d vorgesehen.

Stromabwärts des Relaisventils des Zugfahrzeugs 526a ist weiter ein Drucksensor 526e vorgesehen.

Die Parkbremseinrichtung 516 ist im Parkzustand gezeigt.

Das in Fig. 7 gezeigte Ausführungsbeispiel der elektronischen Parkbremseinrichtung 616 ist im Wesentlichen identisch aufgebaut wie das in Fig. 6 gezeigte Ausführungsbeispiel. Anstelle der Ventile 532a sowie 532b ist jedoch ein 3/2-Ventil 632a vorgesehen, das einen Entlüftungsausgang aufweist. Somit ist nicht ein gesondertes Ventil 532b für eine Entlüftungsfunktion notwendig.

Die bistabile Ventileinheit in 626 in Fig. 7 der elektronischen Parkbremseinrichtung 616 wird ausgebildet durch das Relaisventil des Zugfahrzeugs 626a und eine Steuerventileinrichtung 626b, die pneumatisch/elektrisch ansteuerbar ist. Da die Steuerventileinrichtung 626b im Parken und Fahren auch das Relaisventil des Anhängers ansteuert, ist dieses auch dieser Funktionseinheit zuzuordnen.

Der Aufbau und die Funktionalität einer derartigen elektronischen Parkbremseinrichtung 616 ist vergleichbar wie der bereits aus dem Stand der Technik bekannten Parkbremseinrichtung mit einem bistabilen Steuerventil, das ein Relaisventil ansteuert.

Die erste Ventileinheit 630 wird durch das Relaisventil des Anhängers 630a sowie durch ein Magnetventil 630b ausgebildet.

Die zweite Ventileinheit 632 wird ausgebildet durch das Relaisventil des Anhängers 630a, ein erstes Magnetventil 632a sowie einen Drucksensor 632b.

Eingangsseitig vor dem Steuerventil 626b sind weitere Magnetventile 626c und 626d vorgesehen.

Stromabwärts des Relaisventils des Zugfahrzeugs 626a ist weiter ein Drucksensor 626e vorgesehen.

Die Parkbremseinrichtung 616 ist im Parkzustand gezeigt.

### BEZUGSZEICHENLISTE

- 10: pneumatische Bremseinrichtung
- 12: Federspeicher
- 13: Bremszylinder
- 14: Kompressor
- 16: elektronische Parkbremseinrichtung
- 18: Parkventilschaltelement
- 20: erster Schalter
- 22: zweiter Schalter
- 24: Steuerelektronik
- 26: bistabile Ventileinheit
- 28: Luftaufbereitung
- 30: erste Ventileinrichtung
- 32: zweite Ventileinrichtung
- 34: erster Druckluftbehälter
- 36: zweiter Druckluftbehälter
- 38: Fußbremsventil
- 40: Zugfahrzeug-Schutzventil
- 42: Anschluss
- 44: gesonderter Anschluss
- 46: Leitung
- 48: Leitung
- 50: Leitung
- 52: Leitung
- 54: Leitung
- 56: Leitung
- 58: Leitung
- 60: Leitung
- 62: erste Signalleitung
- 64: zweite Signalleitung
- 116: elektronische Parkbremseinrichtung
- 126: bistabiles Ventil
- 130: erste Ventileinheit
- 130a: Relaisventil des Anhängers
- 130b: erstes Magnetventil
- 130c: zweites Magnetventil
- 130d: drittes Magnetventil
- 130e: Drucksensor
- 132: zweite Ventileinheit
- 132a: Magnetventil
- 132b: Drucksensor
- 216: elektronische Parkbremseinrichtung
- 226: bistabile Ventileinheit
- 226a: Drossel
- 226b: Magnetventil
- 226c: Magnetventil
- 226d: Drucksensor
- 230: erste Ventileinheit
- 230a: Relaisventil des Anhängers
- 230b: erstes Magnetventil
- 230c: zweites Magnetventil
- 232: zweite Ventileinheit
- 232a: Magnetventil
- 232b: Drucksensor
- 316: elektronische Parkbremseinrichtung
- 326: bistabile Ventileinheit
- 326a: Relais
- 330: erste Ventileinheit
- 330a: Relaisventil
- 330b: Magnetventil
- 330c: Magnetventil
- 330d: Magnetventil
- 330e: pneumatisches Ventil
- 330f: Magnetventil
- 330g: Drucksensor
- 332: zweite Ventileinheit
- 416: elektronische Parkbremseinrichtung
- 426: bistabile Ventileinheit
- 426a: Relaisventil
- 426b: Drossel
- 430: erste Ventileinheit
- 430a: Relaisventil
- 430b: Magnetventil
- 430c: Magnetventil
- 430d: pneumatisches Ventil
- 430e: Magnetventil
- 430f: Magnetventil
- 430g: Drucksensor
- 432: zweite Ventileinheit
- 516: elektronische Parkbremseinrichtung
- 526: bistabile Ventileinheit
- 526a: Relais
- 526b: Steuerventileinrichtung
- 526c: Magnetventil
- 526d: Magnetventil
- 526e: Drucksensor
- 530: erste Ventileinheit
- 530a: Relais
- 530b: Magnetventil
- 532: zweite Ventileinheit
- 532a: Magnetventil
- 532b: Magnetventil
- 532c: Drucksensor
- 616: elektronische Parkbremseinrichtung
- 626: bistabile Ventileinheit
- 626a: Relais
- 626b: Steuerventileinrichtung
- 626c: Magnetventil
- 626d: Magnetventil
- 626e: Drucksensor
- 630: erste Ventileinheit
- 630a: Relais
- 630b: Magnetventil
- 632: zweite Ventileinheit
- 632a: 3/2-Ventil
- 632b: Drucksensor

## Patentansprüche

1. Pneumatische Bremseinrichtung (10) für ein Nutzfahrzeug mit wenigstens einem pneumatisch ansteuerbaren Federspeicher (12) für eine Parkbremse des Nutzfahrzeugs und mit einer elektronischen Parkbremseinrichtung (16), mit wenigstens einer Steuerelektronik (24), wenigstens einer bistabilen Ventileinheit (26), wenigstens einer ersten Ventileinheit (30), mittels derer bei aktivierter Parkbremse des Nutzfahrzeugs eine Parkbremse eines Anhängers des Nutzfahrzeugs deaktiviert werden kann, wenigstens eine zweite Ventileinrichtung (32), die derart verschaltbar ist, dass bei einem Absinken des Systemdrucks zur Versorgung der Parkbremse des Anhängers die Parkbremse des Anhängers aktivierbar ist, und mit Zugfahrzeug-Schutzventil (40), wobei mittels der bistabilen Ventileinheit (26) sowohl die Parkbremse des Nutzfahrzeugs als auch die Parkbremse des Anhängers ansteuerbar ist, **dadurch gekennzeichnet, dass** die bistabile Ventileinheit (26) über eine erste Leitung (58) mit dem Federspeicher (12) des Nutzfahrzeugs in Verbindung steht und über eine zweite, davon separate Leitung (60) mit der Parkbremse des Anhängers in Verbindung steht.

2. Pneumatische Bremseinrichtung (10) nach Anspruch 1,
**dadurch gekennzeichnet, dass**
das Zugfahrzeug-Schutzventil (40) Bestandteil der elektronischen Parkbremseinrichtung (16) ist.

3. Pneumatische Bremseinrichtung (10) nach Anspruch 1,
**dadurch gekennzeichnet, dass**
das Zugfahrzeug-Schutzventil (40) Bestandteil einer Luftaufbereitungsanlage (28) der pneumatischen Bremseinrichtung (10) ist.

4. Pneumatische Bremseinrichtung (10) nach einem der vorhergehenden Ansprüche,
**dadurch gekennzeichnet, dass**
die zweite Ventileinrichtung (32) wenigstens einen Drucksensor aufweist, mittels dessen ein Druckabfall des Systemdrucks unter einen vorgegebenen Schwellenwert ermittelbar und ein Signal generierbar ist, anhand dessen mittels der Steuerelektronik (24) die Parkbremse des Anhängers aktivierbar ist.

5. Pneumatische Bremseinrichtung (10) nach einem der vorhergehenden Ansprüche,
**dadurch gekennzeichnet, dass**
die zweite Ventileinrichtung (32) wenigstens ein pneumatisches Ventil aufweist, mittels dessen die Parkbremse des Anhängers aktivierbar ist.

6. Pneumatische Bremseinrichtung (10) nach einem der vorhergehenden Ansprüche,
**dadurch gekennzeichnet, dass**
die bistabile Ventileinheit (26) ein bistabiles Ventil mit Rückkopplung umfasst.

7. Pneumatische Bremseinrichtung (10) nach Anspruch 6,
**dadurch gekennzeichnet, dass**
das bistabile Ventil ein Relaisventil ist.

8. Pneumatische Bremseinrichtung (10) nach Anspruch 7,
**dadurch gekennzeichnet, dass**
die bistabile Ventileinheit (26) weiter eine Drossel aufweist.

9. Pneumatische Bremseinrichtung (10) nach einem der Ansprüche 6 bis 8,
**dadurch gekennzeichnet, dass**
die erste Ventileinheit (26) das Relaisventil des Anhängers und wenigstens zwei weitere Magnetventile aufweist.

10. Pneumatische Bremseinrichtung (10) nach einem der Ansprüche 6 bis 9,
**dadurch gekennzeichnet, dass**
die zweite Ventileinheit (32) das Relaisventil des Anhängers, wenigstens zwei weitere Magnetventile sowie wenigstens einen Drucksensor aufweist.

11. Pneumatische Bremseinrichtung (10) nach einem der Ansprüche 6 bis 10,
**dadurch gekennzeichnet, dass**
die zweite Ventileinheit (32) das Relaisventil des Anhängers und wenigstens ein Entlüftungsventil aufweist.

12. Pneumatische Bremseinrichtung (10) nach einem der vorhergehenden Ansprüche,
**dadurch gekennzeichnet, dass**
die bistabile Ventileinheit (26) ein bistabiles Ventil ohne Rückkopplung umfasst.

13. Pneumatische Bremseinrichtung (10) nach Anspruch 12,
**dadurch gekennzeichnet, dass**
das bistabile Ventil ein bistabiles 3/2-Wegeventil ist, dass ein Relaisventil ansteuert.

14. Pneumatische Bremseinrichtung (10) nach Anspruch 12 oder Anspruch 13,
**dadurch gekennzeichnet, dass**
die bistabile Ventileinheit (26) weiter das Relaisventil des Nutzfahrzeugs umfasst.

15. Pneumatische Bremseinrichtung (10) nach einem der Ansprüche 12 bis 14,
**dadurch gekennzeichnet, dass**
die erste Ventileinheit (30) das Relaisventil des Anhängers und wenigstens ein Magnetventil aufweist.

16. Pneumatische Bremseinrichtung (10) nach einem der Ansprüche 12 bis 15,
**dadurch gekennzeichnet, dass**
die zweite Ventileinheit (32) das Relaisventil des Anhängers, wenigstens ein Magnetventil sowie wenigstens einen Drucksensor aufweist.

## Claims

1. Pneumatic brake device (10) for a commercial vehicle, comprising at least one pneumatically actuable spring force accumulator (12) for a parking brake of the commercial vehicle and comprising an electronic parking brake device (16), having at least one control electronics system (24), at least one bistable valve unit (26), at least one first valve unit (30) by means of which a parking brake of a trailer of the commercial vehicle can be deactivated when the parking brake of the commercial vehicle is activated, at least one second valve device (32) which can be connected up in such a way that, when there is a drop in the system pressure for supplying the parking brake of the trailer, the parking brake of the trailer can be activated, and having a tractor vehicle protection valve (40), wherein both the parking brake of the commercial vehicle and the parking brake of the trailer can be actuated by means of the bistable valve unit (26),
**characterised in that**
the bistable valve unit (26) is connected to the spring force accumulator (12) of the commercial vehicle via a first line (58) and to the parking brake of the trailer via a second, separate line (60).

2. Pneumatic brake device (10) according to claim 1,
**characterised in that**
the tractor vehicle protection valve (40) is a constituent part of the electronic parking brake device (16).

3. Pneumatic brake device (10) according to claim 1,
**characterised in that**
the tractor vehicle protection valve (40) is a constituent part of an air treatment system (28) of the pneumatic brake device (10).

4. Pneumatic brake device (10) according to any of the preceding claims,
**characterised in that**
the second valve device (32) has at least one pressure sensor by means of which a drop in the system pressure below a preset threshold value can be ascertained and a signal can be generated, it being possible for the parking brake of the trailer to be activated by means of the control electronics system (24) on the basis of said signal.

5. Pneumatic brake device (10) according to any of the preceding claims,
**characterised in that**
the second valve device (32) has at least one pneumatic valve by means of which the parking brake of the trailer can be activated.

6. Pneumatic brake device (10) according to any of the preceding claims,
**characterised in that**
the bistable valve unit (26) comprises a bistable valve with feedback.

7. Pneumatic brake device (10) according to claim 6,
**characterised in that**
the bistable valve is a relay valve.

8. Pneumatic brake device (10) according to claim 7,
**characterised in that**
the bistable valve unit (26) further has a throttle.

9. Pneumatic brake device (10) according to any of claims 6 to 8,
**characterised in that**
the first valve unit (26) has the relay valve of the trailer and at least two further solenoid valves.

10. Pneumatic brake device (10) according to any of claims 6 to 9,
**characterised in that**
the second valve unit (32) has the relay valve of the trailer, at least two further solenoid valves and at least one pressure sensor.

11. Pneumatic brake device (10) according to any of claims 6 to 10,
**characterised in that**
the second valve unit (32) has the relay valve of the trailer and at least one venting valve.

12. Pneumatic brake device (10) according to any of the preceding claims,
**characterised in that**
the bistable valve unit (26) comprises a bistable valve without feedback.

13. Pneumatic brake device (10) according to claim 12,
**characterised in that**
the bistable valve is a bistable 3/2-way valve that actuates a relay valve.

14. Pneumatic brake device (10) according to claim 12 or claim 13,
**characterised in that**
the bistable valve unit (26) further comprises the relay valve of the commercial vehicle.

15. Pneumatic brake device (10) according to any of claims 12 to 14,
**characterised in that**
the first valve unit (30) has the relay valve of the trailer and at least one solenoid valve.

16. Pneumatic brake device (10) according to any of claims 12 to 15,
**characterised in that**
the second valve unit (32) has the relay valve of the trailer, at least one solenoid valve and at least one pressure sensor.

## Revendications

1. Dispositif (10) pneumatique de freinage d'un véhicule utilitaire comprenant au moins un ressort (12) accumulateur pouvant être commandé pneumatiquement d'un frein de stationnement du véhicule utilitaire et comprenant un dispositif (16) électronique de frein de stationnement, comprenant au moins une électronique (24) de commande, au moins une unité (26) de vanne bistable, au moins une première unité (30) de vanne, au moyen de laquelle, lorsque le frein de stationnement du véhicule utilitaire est activé, un frein de stationnement d'une remorque du véhicule utilitaire peut être désactivé, au moins un deuxième dispositif (32) de vanne, qui peut être commuté de manière à ce que, si la pression du système d'alimentation du frein de stationnement de la remorque s'abaisse, le frein de stationnement de la remorque peut être activé, et comprenant une vanne (40) de protection du véhicule de traction, dans lequel, au moyen de l'unité (26) de vanne bistable, tant le frein de stationnement du véhicule utilitaire, qu'également le frein de stationnement de la remorque peuvent être commandés,
**caractérisé en ce que**
l'unité (26) de vanne bistable est en liaison avec le ressort (12) accumulateur du véhicule utilitaire par une première ligne (58) et est en liaison avec le frein de stationnement de la remorque par une deuxième ligne (60), qui en est distincte.

2. Dispositif (10) de freinage pneumatique suivant la revendication 1,
**caractérisé en ce que**
la vanne (40) de protection du véhicule de traction est une partie constitutive du dispositif (16) électronique de frein de stationnement.

3. Dispositif (10) de freinage pneumatique suivant la revendication 1,
**caractérisé en ce que**
la vanne (40) de protection du véhicule de traction est une partie constitutive d'un système (28) de traitement d'air du dispositif (10) pneumatique de frein.

4. Dispositif (10) de freinage pneumatique suivant l'une des revendications précédentes,
**caractérisé en ce que**
le deuxième dispositif (32) de vanne a au moins un capteur de pression, au moyen duquel un abaissement de la pression du système en dessous d'une valeur de seuil donnée à l'avance peut être déterminé et il peut être produit un signal à l'aide duquel le frein de stationnement de la remorque peut être activé au moyen de l'électronique (24) de commande.

5. Dispositif (10) de freinage pneumatique suivant l'une des revendications précédentes,
**caractérisé en ce que**
le deuxième dispositif (32) de vanne a au moins une vanne pneumatique, au moyen de laquelle le frein de stationnement de la remorque peut être activé.

6. Dispositif (10) de freinage pneumatique suivant l'une des revendications précédentes,
**caractérisé en ce que**
l'unité (26) de vanne bistable comprend une vanne bistable à réaction.

7. Dispositif (10) de freinage pneumatique suivant la revendication 6,
**caractérisé en ce que**
la vanne bistable est une vanne relais.

8. Dispositif (10) de freinage pneumatique suivant la revendication 7,
**caractérisé en ce que**
l'unité (26) de vanne bistable a, en outre, un étranglement.

9. Dispositif (10) de freinage pneumatique suivant l'une des revendications 6 à 8,
**caractérisé en ce que**
la première unité (26) de vanne a la vanne relais de la remorque et au moins deux autres électrovannes.

10. Dispositif (10) de freinage pneumatique suivant l'une des revendications 6 à 9,
**caractérisé en ce que**
la deuxième unité (32) de vanne a la vanne relais de la remorque, au moins deux autres électrovannes, ainsi qu'au moins un capteur de pression.

11. Dispositif (10) de freinage pneumatique suivant l'une des revendications 6 à 10,
**caractérisé en ce que**
la deuxième unité (32) de vanne a la vanne relais de la remorque et au moins une vanne de purge.

12. Dispositif (10) de freinage pneumatique suivant l'une des revendications précédente,
**caractérisé en ce que**
l'unité (26) de vanne bistable comprend une vanne bistable sans réaction.

13. Dispositif (10) de freinage pneumatique suivant la revendication 12,
**caractérisé en ce que**
la vanne bistable est une vanne bistable à 3/2 voies, qui commande une vanne relais.

14. Dispositif (10) de freinage pneumatique suivant la revendication 12 ou la revendication 13,
**caractérisé en ce que**
l'unité de vanne bistable comprend, en outre, la vanne relais du véhicule utilitaire.

15. Dispositif (10) de freinage pneumatique suivant l'une des revendications 12 à 14,
**caractérisé en ce que**
la première unité (30) de vanne a la vanne relais de la remorque et au moins une électrovanne.

16. Dispositif (10) de freinage pneumatique suivant l'une des revendications 12 à 15,
**caractérisé en ce que**
la deuxième unité (32) de vanne a la vanne relais de la remorque, au moins une électrovanne, ainsi qu'au moins un capteur de pression.
